# FASCICULE DE BREVET EUROPEEN

(11) **EP 3 055 209 B1**
(45) Date de publication et mention de la délivrance du brevet: **06.09.2017**
(21) Numéro de dépôt: 14799506.2
(22) Date de dépôt: 13.10.2014
(51) Int. Cl.: F02K 1/09, F02K 1/76, B64D 33/04, F02K 1/72, F02K 1/12

(54) **NACELLE POUR MOTEUR D'AÉRONEF À TUYÈRE DE SECTION VARIABLE**
FLUGZEUGTRIEBWERKSGONDEL MIT VERSTELLBAREM DÜSENABSCHNITT
AIRCRAFT ENGINE NACELLE HAVING A VARIABLE NOZZLE SECTION

(30) Priorité: 11.10.2013 FR 1359896
(43) Date de publication de la demande: 17.08.2016
(73) Titulaire: Safran Nacelles, 76700 Gonfreville-l'Orcher (FR)
(72) Inventeur: SEGAT, Peter, F-92400 Courbevoie (FR); TISSOT, Sarah, F-78390 Bois D'Arcy (FR); BOUTEILLER, Xavier, F-76250 Déville lès Rouen (FR)
(74) Mandataire: Chevalier, Renaud Philippe
(86) Numéro de dépôt international: PCT/FR2014/052595
(87) Numéro de publication internationale: WO 2015/052457

(56) Documents cités:
- EP-A1- 2 433 864
- WO-A2-2009/029401
- FR-A1- 2 910 937
- FR-A1- 2 934 326
- FR-A1- 2 978 800

## Description

La présente invention se rapporte à une nacelle pour moteur d'aéronef, à tuyère de section variable.

Comme cela est connu en soi, une nacelle de moteur d'aéronef permet de canaliser l'air extérieur vers ce moteur, du type turboréacteur par exemple, et d'assurer l'éjection de cet air à grande vitesse de manière à fournir la poussée nécessaire.

Dans les turboréacteurs à double flux, le flux d'air brassé par la soufflante se divise, en aval de celle-ci, en un flux primaire (dit aussi « chaud ») qui rentre au coeur du turboréacteur pour y subir plusieurs compressions et une détente, et en un flux secondaire (dit aussi « froid »), qui circule à l'intérieur d'une veine sensiblement annulaire, définie d'une part par un carénage du moteur (structure interne fixe, appelée aussi « IFS »), et d'autre part par l'épaisseur de la nacelle.

Le flux d'air froid, qui sort en aval de la nacelle par une tuyère de sortie définie par le bord aval de cette nacelle, fournit l'essentiel de la poussée.

Par ailleurs, comme cela est connu en soi, la nacelle incorpore très fréquemment des moyens d'inversion de poussée, permettant de diriger une partie du flux d'air secondaire vers l'amont de la nacelle lors de l'atterrissage, ce qui contribue activement au freinage de l'aéronef.

Ces moyens d'inversion de poussée sont souvent du type à grilles de déviation, c'est-à-dire qu'ils comportent une série de grilles disposées en aval du carter de soufflante, à la périphérie de la veine de flux froid, ces grilles pouvant être découvertes sur commande par un capot d'inversion de poussée monté coulissant sur la structure de la nacelle.

Outre une fonction d'inversion de poussée, un capot mobile d'inverseur appartient à la section arrière de la nacelle et peut présenter une partie formant tuyère d'éjection.

La section de la tuyère d'éjection du capot peut être adaptée en fonction des différentes phases de vols, à savoir notamment décollage, montée, croisière, descente et atterrissage afin de toujours conserver une section optimale de tuyère en fonction du régime du turboréacteur. La tuyère sera alors appelée tuyère de section variable.

Une telle tuyère de section variable est associée à un système d'actionnement permettant cette variation de section.

Il existe plusieurs solutions pour réaliser une tuyère de section variable.

On connaît notamment une nacelle décrite et représentée dans le document FR-2622929, qui est équipée d'un capot mobile d'inverseur qui présente une section amont destinée à couvrir les grilles de déviation, et une section aval formant tuyère de section variable.

Selon ce document, la section aval du capot présente une forme globalement annulaire, la section aval étant montée coulissante axialement sur la section amont de façon à dégager un passage de fuite entre la section aval et la section amont du capot.

Ce passage de fuite permet à une partie du flux d'air circulant dans la veine secondaire d'être éjectée, ce qui revient à élargir la section de la tuyère formée par le capot. En outre, on connaît le document FR 2978800, qui est considéré comme l'art antérieur le plus proche et décrit les caractéristiques du préambule de la revendication 1. Bien que ce type de nacelle permette de faire varier la section de la tuyère de façon efficace, il présente certains inconvénients.

En effet, la liaison mécanique entre la partie aval annulaire mobile et la partie amont du capot constitue un affaiblissement mécanique de la nacelle.

En plus d'affaiblir le capot d'inversion de poussée, cette liaison mécanique peut aussi engendrer des vibrations de la partie aval annulaire du capot au cours du fonctionnement du moteur.

La présente invention, telle que décrite par les caractéristiques de la revendication 1, vise notamment à résoudre ces inconvénients et se rapporte pour ce faire à un nacelle pour moteur d'aéronef, du type comprenant :
- un capot d'inversion de poussée comportant une section amont de recouvrement et une section aval de tuyère, le capot étant monté coulissant suivant une direction globalement parallèle à l'axe longitudinal de la nacelle, entre une position de jet direct dans laquelle le capot couvre des moyens de déviation du flux d'air, et une position de jet inversé dans laquelle le capot ouvre un passage dans la nacelle et découvre les moyens de déviation, et
- un moyen d'entraînement en déplacement du capot comportant au moins un actionneur,
caractérisée en ce que la section de tuyère du capot délimite au moins une ouverture qui est associée à une porte de fuite, la porte de fuite étant montée mobile sur le capot entre une position fermée dans laquelle la porte coopère avec l'ouverture associée pour s'opposer à l'écoulement du flux d'air à travers ladite ouverture, et une position ouverte de fuite dans laquelle la porte est escamotée pour permettre l'écoulement d'une partie du flux d'air à travers ladite ouverture.

Une telle conception permet de réaliser un capot d'inversion mobile d'un seul tenant, la section amont de recouvrement des moyens de déviation et la section aval de tuyère étant réalisés en une seule pièce, pour favoriser la résistance mécanique structurelle du capot.

Selon une autre caractéristique, la nacelle est équipée d'un moyen de verrouillage de la porte de fuite sur le capot mobile, le moyen de verrouillage étant conçu pour adopter un état déverrouillé dans lequel la porte de fuite est désolidarisée du capot, et un état verrouillé dans lequel la porte de fuite est verrouillée sur le capot, de sorte que la porte de fuite et le capot sont aptes à être entraînés en déplacement simultanément par l'actionneur.

Le moyen de verrouillage permet d'entraîner en déplacement le capot et/ou la porte sélectivement ou de concert, au moyen d'un même actionneur.

Selon une première variante de réalisation de l'invention, la porte de fuite est montée coulissante entre sa position fermée et sa position ouverte, suivant une direction globalement parallèle à l'axe de la nacelle.

Cette première variante de réalisation est de préférence associée à des moyens de déviation du flux à grille de déviation mobile, ces derniers offrant généralement plus d'espace pour permettre le débattement de la porte de fuite en coulissement.

Selon un second mode de réalisation de l'invention, la porte de fuite est montée pivotante entre sa position fermée et sa position ouverte autour d'un axe sensiblement perpendiculaire à l'axe de la nacelle.

Cette seconde variante de réalisation est particulièrement adaptée à des moyens de déviation du flux à grille de déviation fixe, ces derniers offrant un espace limité en aval de la grille de déviation pour le logement de la porte de fuite.

Selon cette seconde variante de réalisation, la porte de fuite comporte :
- une peau interne qui est montée pivotante sur une partie fixe de la nacelle,
- une peau externe qui s'étend en regard de la peau interne et qui est montée pivotante sur une partie fixe de la nacelle, la peau externe présentant un angle d'ouverture inférieur à celui de la peau interne pour limiter les perturbations aérodynamiques à l'extérieur de la nacelle lorsque la porte de fuite occupe sa position ouverte.

Selon un autre aspect, la porte présente une face externe qui est conçue pour assurer la continuité aérodynamique externe du carénage de la nacelle, et une face interne qui est conçue pour assurer la continuité aérodynamique interne de la nacelle, lorsque la porte occupe sa position fermée.

De plus, la nacelle comporte des moyens d'étanchéité qui sont conçus pour s'opposer à l'écoulement de l'air à travers l'ouverture lorsque la porte de fuite occupe sa position fermée.

Les moyens d'étanchéité, en évitant les fuites d'air, assurent un fonctionnement et un rendement optimum de la nacelle et du moteur associé.

Pour favoriser la résistance mécanique structurelle du capot, la section amont de recouvrement et la section aval de tuyère du capot sont réalisées d'un seul tenant.

De plus, l'actionneur comporte un corps amont solidaire d'une partie fixe de la nacelle et une tige d'actionnement aval qui est montée coulissante dans le corps associé suivant un axe globalement parallèle à l'axe de la nacelle et qui est reliée sur la porte de fuite pour entraîner la porte de fuite en déplacement.

Selon un mode de réalisation préféré de l'invention, le capot délimite une pluralité d'ouvertures qui sont réparties de façon circulaire autour de l'axe longitudinal de la nacelle et qui sont chacune associées à une porte de fuite mobile.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective, qui illustre une nacelle d'aéronef comportant un capot d'inversion de poussée délimitant quatre ouvertures de fuite, selon l'invention ;
- la figure 2 est une vue schématique en coupe longitudinale, qui illustre le capot d'inversion de poussée de la figure 1 dans sa position de jet direct et la porte de fuite dans sa position fermée, selon un premier mode de réalisation de l'invention ;

- la figure 3 est une vue schématique similaire à celle de la figure 2, qui illustre le capot d'inversion de poussée de la figure 1 dans sa position de jet direct et la porte de fuite dans sa position ouverte, selon le premier mode de réalisation de l'invention ;
- la figure 4 est une vue schématique similaire à celle de la figure 2, qui illustre le capot d'inversion de poussée de la figure 1 dans sa position de jet inversé et la porte de fuite dans sa position ouverte, selon le premier mode de réalisation de l'invention ;
- la figure 5 est une vue schématique de détail en coupe longitudinale, qui illustre un moyen d'étanchéité de la porte de fuite selon le premier mode de réalisation de l'invention ;
- la figure 6 est une vue schématique en coupe longitudinale, qui illustre le capot d'inversion de poussée de la figure 1 dans sa position de jet direct et la porte de fuite dans sa position fermée, selon un second mode de réalisation de l'invention ;
- la figure 7 est une vue schématique similaire à celle de la figure 6, qui illustre le capot d'inversion de poussée de la figure 1 dans sa position de jet direct et la porte de fuite dans sa position ouverte, selon le second mode de réalisation de l'invention ;
- la figure 8 est une vue schématique similaire à celle de la figure 6, qui illustre le capot d'inversion de poussée de la figure 1 dans sa position de jet inversé et la porte de fuite dans sa position ouverte, selon le second mode de réalisation de l'invention ;
- la figure 9 est une vue schématique de détail en coupe longitudinale suivant l'axe 9-9 de la figure 1, qui illustre l'articulation de la porte de fuite représentée dans sa position fermée, selon le second mode de réalisation de l'invention ;
- la figure 10 est une vue schématique de détail en coupe longitudinale suivant l'axe 10-10 de la figure 1, qui illustre l'articulation de la porte de fuite représentée dans sa position fermée, selon le second mode de réalisation de l'invention ;
- la figure 11 est une vue schématique de détail en coupe longitudinale suivant l'axe 9-9 de la figure 1, qui illustre l'articulation de la porte de fuite représentée dans sa position ouverte, selon le second mode de réalisation de l'invention ;
- la figure 12 est une vue schématique de détail en coupe longitudinale suivant l'axe 10-10 de la figure 1, qui illustre l'articulation de la porte de fuite représentée dans sa position ouverte, selon le second mode de réalisation de l'invention ;
- la figure 13 est une vue schématique de détail en coupe longitudinale, qui illustre un moyen d'étanchéité de la porte de fuite selon le second mode de réalisation de l'invention ;
- la figure 14 est une vue schématique en coupe transversale, qui illustre un moyen d'étanchéité latéral de la porte de fuite selon le second mode de réalisation de l'invention ;
- la figure 15 est une vue schématique similaire à celle de la figure 14, qui illustre une première variante de réalisation du moyen d'étanchéité latéral de la porte de fuite selon le second mode de réalisation de l'invention ;
- la figure 16 est une vue schématique similaire à celle de la figure 14, qui illustre une seconde variante de réalisation du moyen d'étanchéité latéral de la porte de fuite selon le second mode de réalisation de l'invention.

Dans la description et les revendications, pour clarifier la description et les revendications, on adoptera à titre non limitatif la terminologie longitudinal, vertical et transversal en référence au trièdre L, V, T indiqué aux figures, dont l'axe L est parallèle à l'axe A de la nacelle.

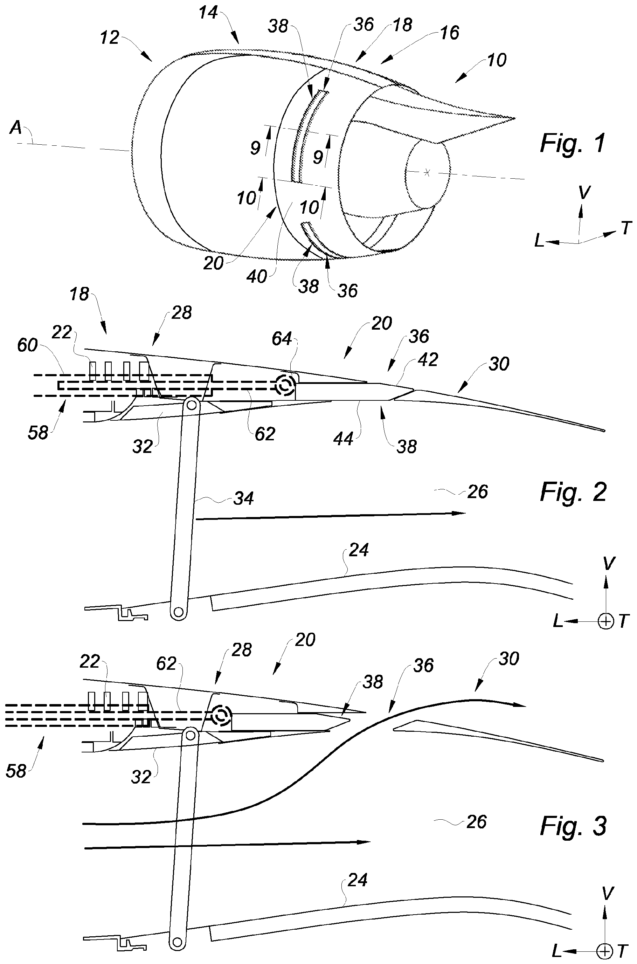

A noter que dans la présente demande de brevet, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence aux figures 1 à 13.

De même, on utilisera à titre non limitatif les expressions « avant » et « arrière » en référence à la partie gauche et à la partie droite respectivement des figures 1 à 13.

Sur l'ensemble de ces figures, des références identiques ou analogues représentent des organes ou ensembles d'organes identiques ou analogues.

On a représenté à la figure 1 une nacelle 10 pour moteur d'aéronef du type turboréacteur (non représenté), la nacelle 10 s'étendant suivant un axe A longitudinal.

La nacelle 10 est destinée à être suspendue à un mât réacteur (non représenté) par l'intermédiaire d'un îlot de fixation (non représenté) formant interface de liaison.

La nacelle 10 s'étend d'avant en arrière depuis une section amont d'entrée d'air 12, une section médiane 14 et une section aval 16 équipée d'un dispositif d'inversion de poussée 18.

Le dispositif d'inversion de poussée 18 comprend un capot 20 d'inversion de poussée sensiblement périphérique et un ensemble de grilles 22 de déviation (dont une est représentée partiellement à la figure 2).

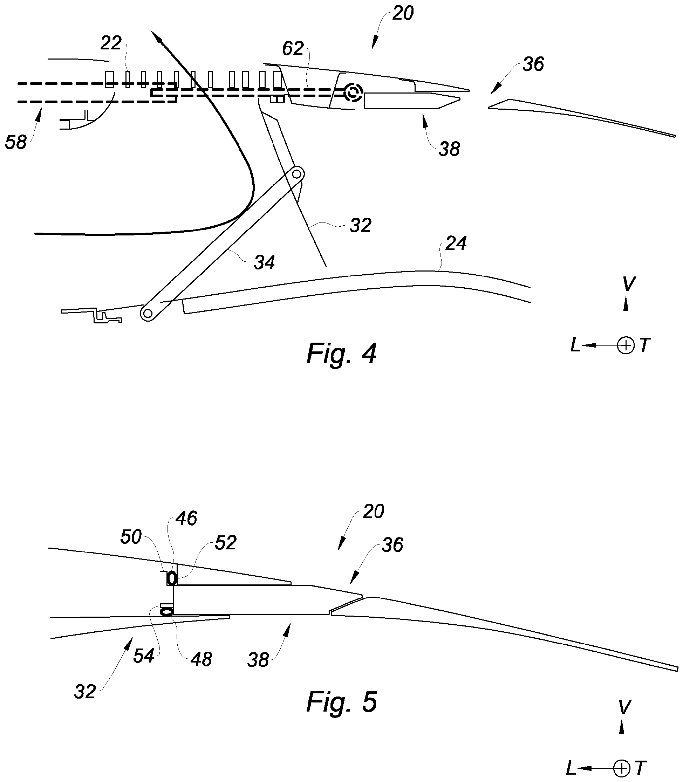

Les grilles 22 de déviation sont montées coulissantes suivant l'axe A de la nacelle 10, entre une position rétractée représentée aux figures 2 et 3, dans laquelle les grilles 22 sont agencées au moins partiellement dans l'épaisseur de la section médiane 14 de la nacelle 10, et une position déployée représentée à la figure 4, dans laquelle les grilles 22 s'étendent en aval de la section médiane 14.

Comme on peut le voir sur la figure 2, le capot 20 d'inversion de poussée est agencé autour d'une structure intérieure 24 fixe annulaire formant carénage du turboréacteur, pour délimiter une veine 26 de flux d'air secondaire.

En outre, le capot 20 comporte une section amont de recouvrement 28 des grilles 22 de déviation et une section aval de tuyère 30.

De plus, des volets 32 d'inversion de poussée sont montés articulés sur le capot 20 chacun par l'intermédiaire d'une biellette 34 montée pivotante sur la structure intérieure 24 fixe de carénage du turboréacteur.

Le capot 20 est monté coulissant suivant une direction globalement parallèle à l'axe A de la nacelle 10, entre une position de jet direct représentée au figures 1 à 3, dans laquelle les volets 32 d'inversion de poussée sont agencés dans le prolongement du capot 20 d'inversion de poussée pour permettre la libre circulation du flux d'air dans la veine 26 et les grilles 22 de déviation du flux d'air sont recouvertes et, une position de jet inversé représentée à la figure 4, dans laquelle le capot 20 est coulissé en aval des grilles 22 de déviation, entraînant le pivotement des volets 32 d'inversion de poussée en travers de la veine 26 du flux d'air secondaire, provoquant la déviation du flux d'air à travers les grilles 22, vers l'extérieur et vers l'amont de la nacelle 10.

De plus, le capot 20 est conçu pour adopter une position supplémentaire de maintenance (non représentée), dans laquelle le capot 20 est reculé à son maximum de façon à permettre un accès à l'intérieur de la nacelle 10.

Selon un autre aspect, la section de tuyère 30 du capot 20 délimite quatre ouvertures 36 qui sont chacune associées à une porte 38 de fuite.

Les quatre ouvertures 36 sont agencées en cercle autour de l'axe A de la nacelle 10, à la périphérie de la nacelle, et elles présentent chacune une forme de fente ouverte radialement vers l'extérieur de la nacelle 10, délimitant un passage entre la veine 26 du flux d'air et l'extérieur de la nacelle 10.

Les ouvertures 36 sont séparées deux à deux par une portion de liaison 40 rigide du capot 20, représentée à la figure 1.

Pour ne pas alourdir la description, seul un ensemble constitué d'une ouverture 36 et d'une porte 38 de fuite associée est décrit en détail par la suite, les ouvertures 36 et les portes 38 associées étant toutes similaires.

Les figures 2 à 5 représentent le capot 20 de la nacelle 10 selon un premier mode de réalisation de l'invention.

Selon ce premier mode de réalisation, la porte 38 de fuite est montée coulissante longitudinalement sur le capot 20 suivant l'axe A de la nacelle 10, entre une position fermée représentée à la figure 2, dans laquelle la porte 38 coopère avec l'ouverture 36 associée pour s'opposer à l'écoulement du flux d'air à travers l'ouverture 36, et une position ouverte de fuite représentée aux figure 3 et 4, dans laquelle la porte 38 est escamotée pour permettre l'écoulement d'une partie du flux d'air à travers l'ouverture 36.

Le flux d'air est représenté par des flèches aux figures 2 à 4.

En référence à la figure 2, la porte 38 de fuite est délimitée par une face externe 42 qui est conçue pour assurer la continuité aérodynamique externe du carénage de la nacelle 10, et une face interne 44 qui est conçue pour assurer la continuité aérodynamique interne de la nacelle 10, pour ne pas perturber l'écoulement du flux d'air à travers la veine 26, lorsque la porte 38 occupe sa position fermée.

Comme on peut le voir aux figures 3 et 4, la porte 38 de fuite est agencée globalement dans le prolongement de la grille 22, en aval de la grille 22.

Plus particulièrement, la porte 38 de fuite est interposée radialement entre le volet 32 et le carénage extérieur du capot 20, lorsque la porte 38 occupe sa position ouverte et le capot 20 occupe sa position de jet direct, en référence à la figure 3.

De plus, selon la figure 5, la nacelle 10 comporte un premier joint 46 et un second joint 48 toriques formant moyens d'étanchéité, qui sont conçus pour s'opposer à l'écoulement de l'air à travers l'ouverture 36 lorsque la porte 38 de fuite occupe sa position fermée.

Le premier joint 46 est porté par une cornière 50 qui est agencée à une extrémité amont de la porte 38 de fuite, en regard d'un bord transversal 52 formé par le capot 20, le premier joint 46 étant adapté pour coopérer avec le bord transversal 52 du capot 20 lorsque la porte 38 de fuite est fermée.

De même, le second joint 48 est porté par une cornière 54 qui est agencée à l'extrémité amont de la porte 38 de fuite, en regard d'une face externe 56 du volet 32 d'inversion, le second joint 48 étant adapté pour coopérer avec la face externe 56 du volet 32 lorsque la porte 38 de fuite est fermée et le capot 20 est en position de jet direct.

Selon un autre aspect, la porte 38 de fuite est entraînée en déplacement par un actionneur 58 du type vérin qui comporte un corps 60 amont (représenté partiellement) solidaire d'une partie fixe de la nacelle 10 et une tige 62 d'actionnement aval.

La tige 62 de l'actionneur 58 est montée coulissante longitudinalement dans le corps 60 associé suivant un axe globalement parallèle à l'axe A de la nacelle 10.

De plus, la tige 62 présente une extrémité libre 64 aval qui est reliée sur la porte 38 de fuite pour entraîner la porte 38 de fuite en déplacement.

De façon complémentaire, la nacelle 10 est équipée d'un moyen de verrouillage (non représenté) de la porte 38 de fuite sur le capot 20 mobile.

Le moyen de verrouillage est conçu pour adopter un état déverrouillé dans lequel la porte 38 de fuite est désolidarisée du capot 20 et est apte à être entraînée isolément en déplacement, directement par l'actionneur 58 associé, et un état verrouillé dans lequel la porte 38 de fuite est verrouillée sur le capot 20 de sorte que la porte 38 de fuite et la capot 20 sont aptes à être entraînés en déplacement simultanément par l'actionneur 58.

Le moyen de verrouillage est d'un type connu tel qu'un verrou à griffes ou à crochet, et il est associé à tout type de commande connu, hydraulique, électrique ou pneumatique, asservi au système de commande de la nacelle 10 également d'un type connu.

Un exemple des différentes étapes de verrouillage et de déverrouillage de la porte 38 de fuite et du capot 20 est représenté sur les figures 2 à 5.

Sur la figure 2, la porte 38 de fuite est fermée et le capot 20 occupe sa position de flux direct.

Sur la figure 3, la porte 38 de fuite est entraînée en translation vers l'arrière par l'actionneur 58, depuis sa position fermée, jusqu'à sa position ouverte, provoquant ainsi une augmentation de la section de tuyère 30 formée par le capot 20.

A cet effet, le moyen de verrouillage occupe un état déverrouillé pour désolidariser la porte 38 de fuite et le capot 20.

A l'inverse, en référence à la figure 4, le moyen de verrouillage occupe un état verrouillé pour solidariser le capot 20 et la porte 38 de fuite en déplacement, pendant que l'ensemble formé par le capot 20 et la porte 38 est entraîné vers l'arrière par l'actionneur 58 jusqu'à ce que le capot 20 occupe sa position de jet indirect, pour découvrir la grille 22 de déviation et entraîner le volet 32 en pivotement.

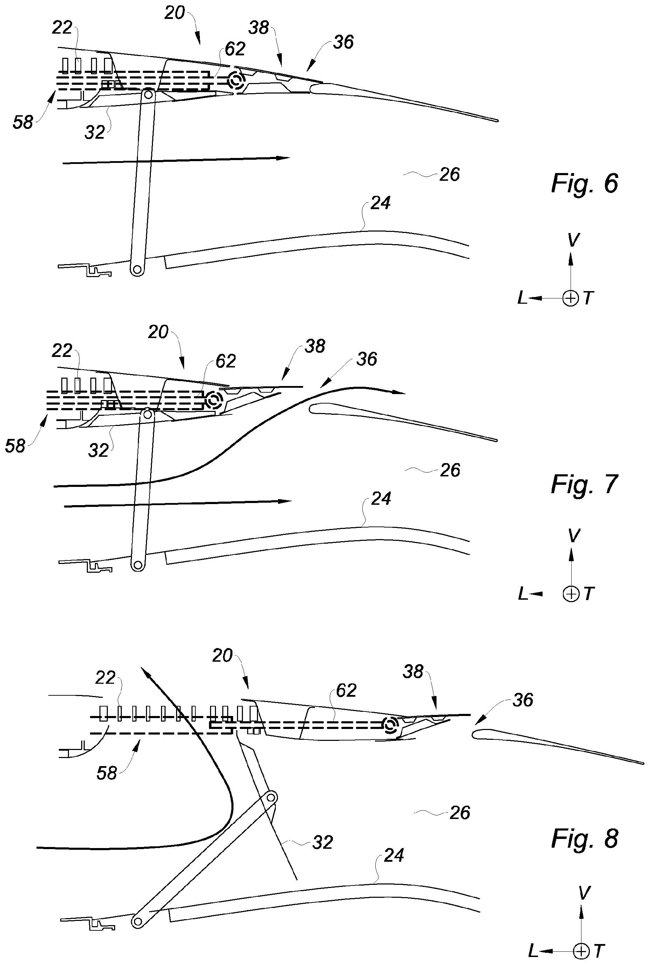

Les figures 6 à 16 représentent le capot 20 de la nacelle 10 selon un second mode de réalisation de l'invention.

Selon ce second mode de réalisation, la porte 38 de fuite est montée pivotante sur le capot 20, entre une position fermée représentée au figures 6, 9 et 10, dans laquelle la porte 38 coopère avec l'ouverture 36 associée pour s'opposer à l'écoulement du flux d'air à travers l'ouverture 36, et une position ouverte de fuite représentée aux figure 7, 8, 11 et 12 dans laquelle la porte 38 est escamotée pour permettre l'écoulement d'une partie du flux d'air à travers l'ouverture 36.

Le flux d'air est représenté par des flèches aux figures 6 à 8.

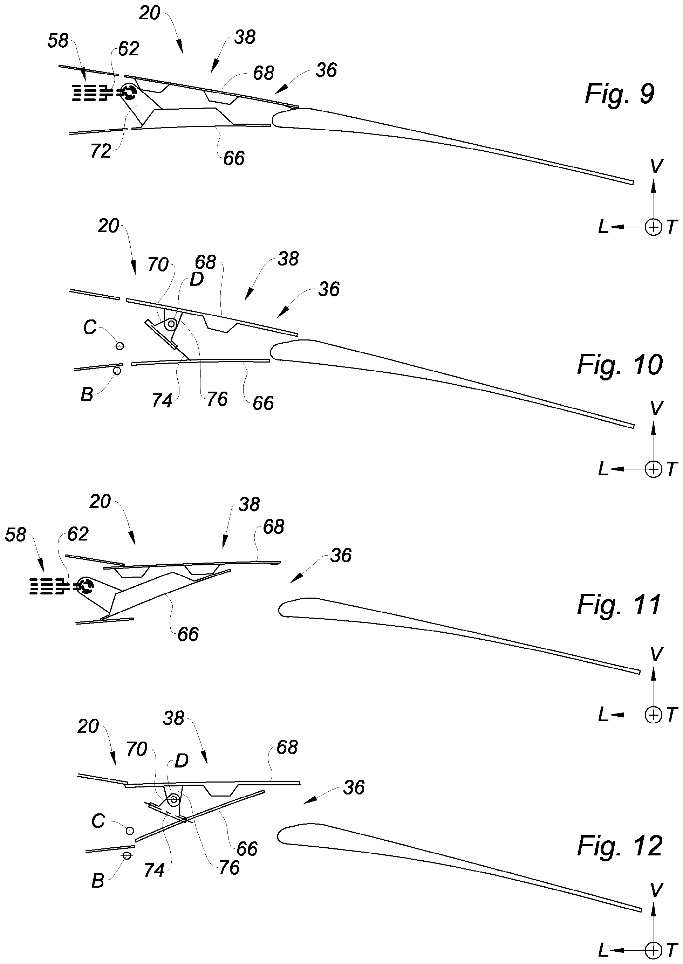

Selon le second mode de réalisation de l'invention, comme on peut le voir en détail aux figures 9 à 12, la porte 38 de fuite comporte une peau interne 66, une peau externe 68 et une glissière 70 qui relie la peau interne 66 et la peau externe 68 entre elles de façon coulissante.

La peau interne 66 et la peau externe 68 sont montées pivotantes sur le capot 20 autour d'un axe B et d'un axe C respectivement, les axes B et C étant perpendiculaires à l'axe A de la nacelle 10 et décalés entre eux, l'axe B de pivotement de la peau interne 66 étant radialement plus proche de l'axe A central de la nacelle 10 que l'axe C de pivotement de la peau externe 68, comme on peut le voir à la figure 10.

En outre, selon la figure 9, la peau interne 66 présente une partie amont 72 qui est montée pivotante sur la tige 62 d'actionnement de l'actionneur 58.

De plus, selon la figure 10, la peau interne 66 comporte un rail de guidage 74 qui s'étend vers la peau externe 68 et qui est monté coulissant dans la glissière 70 prévue à cet effet.

De façon complémentaire, la glissière 70 est équipée d'une tête de pivotement 76 qui est montée pivotante sur la peau externe 68, de sorte que la glissière 70 est articulée en pivotement sur la peau externe 68 autour d'un axe D perpendiculaire à l'axe A de la nacelle 10, et parallèle aux axes B et C de pivotement de la peau interne 66 et de la peau externe 68 respectivement.

L'entraînement en pivotement de la porte 38 de fuite selon le second mode de réalisation, depuis sa position ouverte jusqu'à sa position fermée, est décrit ci-dessous.

La tige 62 de l'actionneur 58 est entraînée vers l'avant, ou l'amont, de la nacelle 10 de sorte que la peau interne 66 pivote autour de son axe B de pivotement.

Simultanément, comme on peut le voir à la figure 12, le rail de guidage 74 de la peau interne 66 coulisse dans la glissière 70, la glissière 70 étant alors sensiblement entraînée en déplacement radialement vers l'extérieur de la nacelle 10, la glissière 70 entraînant de concert la peau externe 68 en pivotement autour de son axe C de pivotement.

Un tel mécanisme permet à la peau externe 68 de présenter un angle d'ouverture inférieur à celui de la peau interne 66 pour limiter le débordement de la peau externe 68 à l'extérieur de la nacelle 10 lorsque la porte 38 de fuite occupe sa position ouverte, afin de limiter les perturbations aérodynamique à l'extérieur de la nacelle 10.

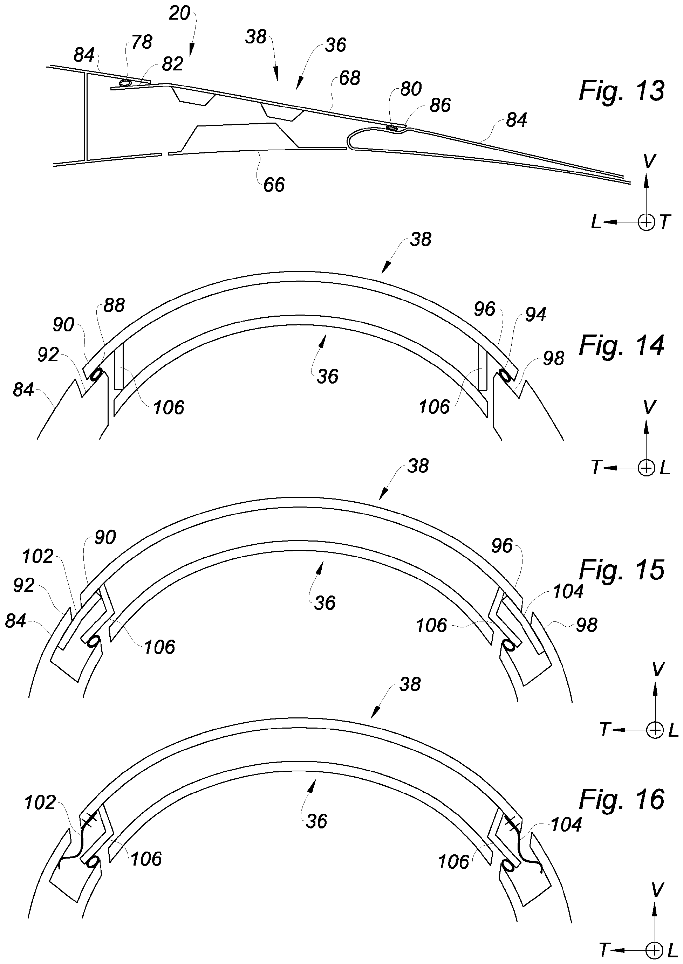

Selon un autre aspect, en référence à la figure 13, toujours selon le second mode de réalisation de l'invention, la porte 38 est équipée d'un premier joint amont 78 et d'un second joint 80 aval du type joint torique, formant moyen d'étanchéité entre la porte 38 et l'ouverture 36 associée du capot 20, lorsque la porte 38 occupe sa position fermée.

A cet effet, le premier joint amont 78 est interposé entre une portion d'extrémité amont 82 de la peau externe 68 de la porte 38, et une enveloppe externe 84 du capot 20.

De même, le second joint aval 80 est interposé entre une portion aval 86 de la peau externe 68 de la porte 38 et l'enveloppe externe 84 du capot 20.

Complémentairement, selon la figure 14, la porte 38 de fuite est équipée d'un moyen d'étanchéité latéral entre la porte 38 et l'ouverture 36 associée du capot 20, pour empêcher les fuites d'air latérales, ou transversales, c'est-à-dire selon une direction perpendiculaire à l'axe A de la nacelle 10, entre la porte 38 et l'ouverture 36 associée, lorsque la porte 38 occupe sa position fermée.

Le moyen d'étanchéité latéral comporte un premier joint 88 qui est interposé entre un premier bord latéral 90 longitudinal de la porte 38 et un premier bord latéral 92 complémentaire longitudinal de l'enveloppe externe 84 du capot 20.

Par symétrie, le moyen d'étanchéité latéral comporte un second joint 94 qui est interposé entre un second bord latéral 96 longitudinal de la porte 38 et un second bord latéral 98 complémentaire longitudinal de l'enveloppe externe 84 du capot 20.

Selon une variante de réalisation du moyen d'étanchéité latéral, représentée à la figure 15, la porte 38 comporte une première bande d'étanchéité 102 qui s'étend depuis le premier bord latéral 90 longitudinal de la porte 38, jusqu'au premier bord latéral 92 de l'enveloppe externe 84 du capot 20, pour empêcher les fuites d'air latérales entre la porte 38 et l'ouverture 36 associée.

Par symétrie, la porte 38 comporte une seconde bande d'étanchéité 104 qui s'étend depuis le second bord latéral 96 longitudinal de la porte 38, jusqu'au second bord latéral 98 de l'enveloppe externe 84 du capot 20.

Enfin, selon une autre variante de réalisation du moyen d'étanchéité latéral, représentée à la figure 16, la première bande d'étanchéité 102 est fixée sur le premier bord latéral 90 longitudinal de la porte 38 et sur le premier bord latéral 92 de l'enveloppe externe 84 du capot 20, de sorte que la première bande d'étanchéité 102 forme une bavette, ou un voile, pour éviter l'écoulement de l'air sur les côtés de la porte 38, afin de favoriser un écoulement axial longitudinal de l'air à travers l'ouverture 36 lorsque la porte 38 est ouverte, favorable aux performances de poussée de la nacelle 10.

A cet effet, la première bande d'étanchéité est réalisée en matériau déformable élastiquement, comme un élastomère.

Par symétrie, la seconde bande d'étanchéité 104 est fixée sur le second bord latéral 96 longitudinal de la porte 38 et sur le second bord latéral 98 de l'enveloppe externe 84 du capot 20.

De plus, pour éviter l'écoulement de l'air sur les côtés de la porte 38, des bavettes 106 latérales rigides sont agencées de chaque côté de la porte 38, comme on peut le voir aux figures 14 à 16.

A titre non limitatif, l'invention s'applique aussi à une nacelle comprenant un dispositif d'inversion de poussée à grilles 22 de déviation dites « fixes ».

De même, l'invention n'est pas limitée à un capot 20 délimitant quatre ouvertures 36, le nombre d'ouverture peut par exemple être de six.

Toutefois, ce type de dispositif d'inversion de poussée à grilles fixes offrant un espace moins important pour loger les portes de fuite, il sera de préférence associé au second mode de réalisation de l'invention selon lequel la porte 38 de fuite est pivotante et ne nécessite qu'un espace réduit de débattement dans le capot 20.

## Revendications

1. Nacelle (10) pour moteur d'aéronef, du type comprenant :
- un capot (20) d'inversion de poussée comportant une section amont de recouvrement (28) et une section aval de tuyère (30), le capot (20) étant monté coulissant suivant une direction globalement parallèle à l'axe (A) longitudinal de la nacelle (10), entre une position de jet direct dans laquelle le capot (20) couvre des moyens de déviation du flux d'air, et une position de jet inversé dans laquelle le capot (20) ouvre un passage dans la nacelle (10) et découvre les moyens de déviation, et
- un moyen d'entraînement en déplacement du capot (20) comportant au moins un actionneur (58),
- au moins une ouverture (36) qui est délimitée par la section de tuyère (30) du capot (20) et qui est associée à une porte (38) de fuite, la porte (38) de fuite étant montée mobile sur le capot (20) entre une position fermée dans laquelle la porte (38) coopère avec l'ouverture (36) associée pour s'opposer à l'écoulement du flux d'air à travers ladite ouverture (36), et une position ouverte de fuite dans laquelle la porte (38) est escamotée pour permettre l'écoulement d'une partie du flux d'air à travers ladite ouverture (36),
**caractérisée en ce que** la porte (38) de fuite est choisie dans le groupe comprenant une porte (38) de fuite montée coulissante entre sa position fermée et sa position ouverte, suivant une direction globalement parallèle à l'axe (A) de la nacelle (10), et une porte (38) de fuite montée pivotante entre sa position fermée et sa position ouverte autour d'un axe sensiblement perpendiculaire à l'axe (A) de la nacelle (10), la porte (38) de fuite pivotante comportant :
- une peau interne (66) qui est montée pivotante sur une partie fixe de la nacelle (10), et
- une peau externe (68) qui s'étend en regard de la peau interne (66) et qui est montée pivotante sur une partie fixe de la nacelle (10), la peau externe (68) présentant un angle d'ouverture inférieur à celui de la peau interne (66) pour limiter les perturbations aérodynamique à l'extérieur de la nacelle (10) lorsque la porte (38) de fuite occupe sa position ouverte.

2. Nacelle (10) pour moteur d'aéronef selon la revendication 1, **caractérisée en ce qu'**elle est équipée d'un moyen de verrouillage de la porte (38) de fuite sur le capot (20) mobile, le moyen de verrouillage étant conçu pour adopter un état déverrouillé dans lequel la porte (38) de fuite est désolidarisée du capot (20), et un état verrouillé dans lequel la porte (38) de fuite est verrouillée sur le capot (20), de sorte que la porte (38) de fuite et le capot (20) sont aptes à être entraînés en déplacement simultanément par l'actionneur (58).

3. Nacelle (10) pour moteur d'aéronef selon l'une quelconque des revendications précédentes, **caractérisée en ce que** la porte (38) présente une face externe (42) qui est conçue pour assurer la continuité aérodynamique externe du carénage de la nacelle (10), et une face interne (44) qui est conçue pour assurer la continuité aérodynamique interne de la nacelle (10), lorsque la porte (38) occupe sa position fermée.

4. Nacelle (10) pour moteur d'aéronef selon l'une quelconque des revendications précédentes, **caractérisée en ce qu'**elle comporte des moyens d'étanchéité qui sont conçus pour s'opposer à l'écoulement de l'air à travers l'ouverture (36) lorsque la porte (38) de fuite occupe sa position fermée.

5. Nacelle (10) pour moteur d'aéronef selon l'une quelconque des revendications précédentes, **caractérisée en ce que** la section amont de recouvrement (28) et la section aval de tuyère (30) du capot (20) sont réalisées d'un seul tenant.

6. Nacelle (10) pour moteur d'aéronef selon l'une quelconque des revendications précédentes, **caractérisée en ce que** l'actionneur (58) comporte un corps (60) amont solidaire d'une partie fixe de la nacelle (10) et une tige (62) d'actionnement aval qui est montée coulissante dans le corps (60) associé suivant un axe globalement parallèle à l'axe (A) de la nacelle (10) et qui est reliée sur la porte (38) de fuite pour entraîner la porte (38) de fuite en déplacement.

7. Nacelle (10) pour moteur d'aéronef selon l'une quelconque des revendications précédentes, **caractérisée en ce que** le capot (20) délimite une pluralité d'ouvertures (36) qui sont réparties de façon circulaire autour de l'axe (A) longitudinal de la nacelle (10) et qui sont chacune associées à une porte (38) de fuite mobile.

## Patentansprüche

1. Gondel (10) für Flugzeugmotor der Art, umfassend:
- eine Haube (20) zur Schubumkehr, umfassend einen vorgelagerten Abdeckungsabschnitt (28) und einen nachgelagerten Rohrabschnitt (30), wobei die Haube (20) gleitend gemäß einer Richtung montiert ist, die im Allgemeinen parallel zur Längsachse (A) der Gondel (10) ist, zwischen einer Position des direkten Strahls, in der die Haube (20) die Mittel zur Umleitung des Luftflusses abdeckt, und einer Position des umgekehrten Strahls, in der die Haube (20) einen Durchgang in der Gondel (10) öffnet und die Mittel zur Umleitung aufdeckt, und
- ein Mittel zum Bewegungsantrieb der Haube (20), umfassend mindestens eine Betätigungsvorrichtung (58),
- mindestens eine Öffnung (36), die durch den Rohrabschnitt (30) der Haube (20) begrenzt ist und die mit einem Ausgangstor (38) assoziiert ist, wobei das Ausgangstor (38) beweglich auf der Haube (20) zwischen einer geschlossenen Position, in der das Tor (38) mit der assoziierten Öffnung (36) zusammenarbeitet, um sich der Strömung des Luftflusses durch die Öffnung (36) entgegenzusetzen, und einer offenen Ausgangsposition montiert ist, in der das Tor (38) zurückgezogen ist, um die Strömung eines Teils des Luftflusses durch die Öffnung (36) zu ermöglichen,
**dadurch gekennzeichnet, dass** das Ausgangstor (38) ausgewählt ist aus der Gruppe, umfassend ein Ausgangstor (38), das gleitend zwischen seiner geschlossenen und seiner offenen Position montiert ist, gemäß einer Richtung, die im Allgemeinen parallel zur Achse (A) der Gondel (10) ist, und ein Ausgangstor (38), das schwenkbar zwischen seiner geschlossenen Position und seiner offenen Position um eine Achse montiert ist, die im Wesentlichen senkrecht zur Achse (A) der Gondel (10) ist, wobei das schwenkbare Ausgangstor (38) Folgendes umfasst:
- eine Innenhaut (66), die schwenkbar auf einem festen Teil der Gondel (10) montiert ist, und
- eine Außenhaut (68), die sich gegenüber der Innenhaut (66) erstreckt, und die schwenkbar auf einem festen Teil der Gondel (10) montiert ist, wobei die Außenhaut (68) einen Öffnungswinkel aufweist, der geringer als derjenige der Innenhaut (66) ist, um die aerodynamischen Störungen an der Außenseite der Gondel (10) zu begrenzen, wenn das Ausgangstor (38) seine offene Position einnimmt.

2. Gondel (10) für Flugzeugmotor nach Anspruch 1, **dadurch gekennzeichnet, dass** sie mit einem Mittel zur Verriegelung des Ausgangstors (38) auf der beweglichen Haube (20) ausgestattet ist, wobei das Mittel zur Verriegelung entworfen ist, um einen entriegelten Zustand einzunehmen, in dem das Ausgangstor (38) von der Haube (20) gelöst ist, und einen verriegelten Zustand, in dem das Ausgangstor (38) auf der Haube (20) verriegelt ist, so dass das Ausgangstor (38) und die Haube (20) ausgelegt sind, um gleichzeitig durch die Betätigungsvorrichtung (58) in Bewegung angetrieben zu werden.

3. Gondel (10) für Flugzeugmotor nach einem der vorhergehenden Ansprüche, **dadurch gekennzeichnet, dass** das Tor (38) eine äußere Seite (42) aufweist, die entworfen ist, um die äußere aerodynamische Güte der Stromlinienverkleidung der Gondel (10) sicherzustellen, und eine innere Seite (44), die entworfen ist, um die innere aerodynamische Güte der Gondel (10) sicherzustellen, wenn das Tor (38) seine geschlossene Position einnimmt.

4. Gondel (10) für Flugzeugmotor nach einem der vorhergehenden Ansprüche, **dadurch gekennzeichnet, dass** sie Dichtungsmittel umfasst, die entworfen sind, um sich der Strömung der Luft durch die Öffnung (36) entgegenzusetzen, wenn das Ausgangstor (38) seine Verschlussposition einnimmt.

5. Gondel (10) für Flugzeugmotor nach einem der vorhergehenden Ansprüche, **dadurch gekennzeichnet, dass** der vorgelagerte Abdeckungsabschnitt (28) und der nachgelagerte Rohrabschnitt (30) der Haube (20) einstückig durchgeführt sind.

6. Gondel (10) für Flugzeugmotor nach einem der vorhergehenden Ansprüche, **dadurch gekennzeichnet, dass** die Betätigungsvorrichtung (58) einen vorgelagerten Körper (60) umfasst, der mit einem festen Teil der Gondel (10) fest verbunden ist, und einen nachgelagerten Betätigungsschaft (62), der gleitend in dem assoziierten Körper (60) gemäß einer im Allgemeinen parallelen Achse zur Achse (A) der Gondel (10) montiert ist, und der auf dem Ausgangstor (38) verbunden ist, um das Ausgangstor (38) in Bewegung anzutreiben.

7. Gondel (10) für Flugzeugmotor nach einem der vorhergehenden Ansprüche, **dadurch gekennzeichnet, dass** die Haube (20) eine Vielzahl von Öffnung (36) begrenzt, die auf kreisförmige Weise um die Längsachse (A) der Gondel (10) verteilt sind, und die jeweils mit einem beweglichen Ausgangstor (38) assoziiert sind.

## Claims

1. A nacelle (10) for an aircraft engine, of the type comprising:
- a thrust reverser cowl (20) including an upstream cover section (28) and a downstream nozzle section (30), the cowl (20) being slidably mounted in a direction generally parallel to the longitudinal axis (A) of the nacelle, between a direct jet position in which the cowl (20) covers diverting means of the air flow, and an reverse jet position in which the cowl (20) opens a passage in the nacelle (10) and uncovers the diverting means, and
- a means for driving in displacement the cowl (20) including at least one actuator (58),
- at least one opening (36) which is delimited by the nozzle section (30) of the cowl (20) and which is associated to a leakage door (38), the leakage door (38) being movably mounted on the cowl (20) between a closed position in which the door (38) cooperates with the associated opening (36) to oppose the air flow through said opening (36), and an open leakage position in which the door (38) is retracted to allow the flow of a part of the air flow through said opening (36),
**characterized in that** the leakage door (38) is selected from the group comprising a leakage door (38) slidably mounted between the closed position and the open position thereof, along a direction generally parallel to the axis (A) of the nacelle (10), and a leakage door (38) pivotally mounted between the closed position and the open position thereof about an axis substantially perpendicular to the axis (A) of the nacelle (10), the pivoting leakage door (38) including:
- an inner skin (66) which is pivotally mounted on a fixed portion of the nacelle (10), and
- an outer skin (68) which extends facing the inner skin (66) and which is pivotally mounted on a fixed portion of the nacelle (10), the outer skin (68) having an opening angle smaller than that of the inner skin (66) in order to limit the aerodynamic disturbances outside the nacelle (10) when the leakage door (38) occupies the open position thereof.

2. The nacelle (10) for an aircraft motor according to claim 1, **characterized in that** it is equipped with locking means of the leakage door (38) on the movable cowl (20), the locking means being designed to adopt an unlocked state in which the leakage door (38) is detached from the cowl (20), and a locked state in which the leakage door (38) is locked on the cowl (20), such that the leakage door (38) and the cowl (20) are capable of being simultaneously driven in displacement by the actuator (58).

3. The nacelle (10) for an aircraft engine according to any one of the preceding claims, **characterized in that** the door (38) has an outer face (42) which is designed to ensure the outer aerodynamic continuity of the fairing of the nacelle (10), and an inner face (44) which is designed to ensure the inner aerodynamic continuity of the nacelle (10), when the door (38) occupies the closed position thereof.

4. The nacelle (10) for an aircraft engine according to any one of the preceding claims, **characterized in that** it includes sealing means which are designed to oppose the air flow through the opening (36) when the leakage door (38) occupies the closed position thereof.

5. The nacelle (10) for an aircraft engine according to any one of the preceding claims, **characterized in that** the upstream cover section (28) and the downstream nozzle section (30) of the cowl (20) are made in one piece.

6. The nacelle (10) for an aircraft motor according to any one of the preceding claims, **characterized in that** the actuator (58) includes an upstream body (60) secured to a fixed portion of the nacelle (10) and a downstream actuating rod (62) which is slidably mounted in the associated body (60) along an axis generally parallel to the axis (A) of the nacelle (10) and which is linked on the leakage door (38) in order to drive the leakage door (38) in displacement.

7. The nacelle (10) for an aircraft motor according to any one of the preceding claims, **characterized in that** the cowl (20) delimits a plurality of openings (36) which are circularly distributed about the longitudinal axis (A) of the nacelle (10) and which are each associated to a movable leakage door (38).
